(19) 

**Europäisches Patentamt**
**European Patent Office**
**Office européen des brevets**

(11) **EP 4 542 869 A1**

(12) **DEMANDE DE BREVET EUROPEEN**

(43) Date de publication:
**23.04.2025 Bulletin 2025/17**

(21) Numéro de dépôt: **24207040.7**

(22) Date de dépôt: **16.10.2024**

(51) Classification Internationale des Brevets (IPC):
**H04B 1/7163** (2011.01)   **H04B 1/7183** (2011.01)

(52) Classification Coopérative des Brevets (CPC):
**H04B 1/71637; H04B 1/7183**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **18.10.2023 FR 2311266**

(71) Demandeur: **Commissariat à l'Energie Atomique et aux Energies Alternatives**
**75015 Paris (FR)**

(72) Inventeur: **DEHMAS, François**
**38054 GRENOBLE Cedex 09 (FR)**

(74) Mandataire: **Atout PI Laplace**
**Immeuble Up On**
**25 Boulevard Romain Rolland**
**CS 40072**
**75685 Paris Cedex 14 (FR)**

(54) **PROCÉDÉ, ET DISPOSITIF, DE SYNCHRONISATION D'UN DISPOSITIF RÉCEPTEUR DE TÉLÉCOMMUNICATIONS RECEVANT UN SIGNAL RADIO IMPULSIONNEL À BANDE TRÈS LARGE**

(57)     Un procédé de synchronisation dans un récepteur (20) recevant un signal IR-UWB comprenant des paquets de données dotés d'un préambule comprenant une première partie de préambule d'au moins deux occurrences d'une première séquence de préambule de N impulsions espacées d'une période T et qui sont chacune égale à une impulsion de référence pondérée par un coefficient complexe $c_n$, n = 0 à N-1 indiquant le rang de l'impulsion dans la première séquence et une deuxième partie de préambule d'au moins deux occurrences d'une deuxième séquence de préambule égale à la conjuguée de la première séquence, comprenant :
considérant les NP échantillons successifs $s_n$ pour n=0 à NP-1, d'une tranche, de durée NT, de première, respectivement deuxième, partie de préambule d'un paquet

reçu, détermination de $x_n = c^*_{\lfloor \frac{n}{P} \rfloor} s_n$, respectivement

$y_n = c_{\lfloor \frac{n}{P} \rfloor} z_n$, avec $T_s$, période d'échantillonnage $T = P \times T_s$ ;

détermination de la fréquence $f_d$, respectivement $f_g$ de la séquence $x_n$, respectivement $y_n$ ;
calcul d'un décalage $\Delta f$ à appliquer pour la synchronisation sur le signal reçu en fonction de :

$$f_d = \frac{1}{NPT_s}\left(\left\lfloor \frac{t_{0m}}{T} \right\rfloor + \epsilon\right) + \Delta f$$

$$f_g = -\frac{1}{NPT_s}\left(\left\lfloor \frac{t_{0m}}{T} \right\rfloor + \epsilon\right) + \Delta f$$

FIG.1

## Description

### Domaine technique :

L'invention se situe dans le domaine des télécommunications et de la radiolocalisation. Plus particulièrement, elle concerne les signaux radio impulsionnels à bande très large (IR-UWB pour « impulse radio ultra wideband » en anglais). Un tel signal est émis par un dispositif émetteur. Le dispositif récepteur recevant le signal émis doit se synchroniser en temps et fréquence sur le signal émis afin de pouvoir démoduler le signal transmis et réaliser les traitements pour décoder le message transmis et/ou extraire des informations sur le signal physique pour faire de l'estimation de distance, d'angle d'arrivée ou de localisation.

### Technique antérieure :

On entend par synchronisation l'alignement, par le dispositif récepteur, de son horloge sur :

- la même fréquence (synchronisation fréquentielle), et éventuellement la même phase ;

- une même origine de temps (synchronisation temporelle) que celle de l'émetteur décalée du temps de propagation du signal de l'émetteur vers le récepteur.

En IR-UWB, la synchronisation est réalisée grâce au préambule qui commence le paquet transmis. Ce préambule est généralement constitué de symboles formés à partir d'une séquence, comme dans les différentes couches physiques IR-UWB du standard IEEE802.15.4 (cf. "IEEE Standard for Low-Rate Wireless Networks," in IEEE Std 802.15.4-2020 (Révision of IEEE Std 802.15.4-2015) , vol., no., pp.1-800, 23 July 2020). Ces séquences sont formées d'élément binaires (+1 ; -1) ou ternaire (+1 ; 0 ; -1) qui viennent pondérer les impulsions. Le symbole est ensuite répété plusieurs fois dans le préambule.

La synchronisation se fait notamment en réalisant une corrélation entre le signal reçu et un symbole de préambule. La position des pics de corrélation obtenus permet de réaliser la synchronisation temporelle. Plus on veut se synchroniser à de faibles rapports signal sur bruit (SNR pour l'anglais « signal-to-noise ratio ») (par exemple pour avoir une grande portée), plus longues doivent être les séquences à utiliser dans les corrélations. Or l'émetteur et le récepteur ne sont pas non plus parfaitement synchronisés en fréquence et cet écart limite la durée de la corrélation : si la rotation de phase sur un symbole est trop grande, l'accumulation des impulsions finit par être destructive. On peut réaliser des accumulations non-cohérentes pour palier à ce problème, mais alors le gain de traitement est plus faible qu'avec des accumulations cohérentes.

Il existe donc un besoin de réaliser une synchronisation à faible SNR (utilisant donc de longues séquences, et donnant lieu à l'accumulation d'un nombre important d'impulsions) en présence de niveaux d'offset de fréquence (CFO pour « central frequency offset) classiques.

### Résumé de l'invention :

A cet effet, suivant un premier aspect, la présente invention décrit un procédé de synchronisation d'un dispositif récepteur de télécommunications recevant un signal radio impulsionnel à bande très large comprenant des paquets de données, un paquet de données comprenant un préambule, ledit procédé comprenant une étape de synchronisation du dispositif récepteur sur le signal reçu en fonction dudit préambule ;

ledit procédé étant caractérisé en ce que les étapes suivantes sont mises en oeuvre par le dispositif récepteur de télécommunication, le préambule comprenant une première partie de préambule d'au moins deux occurrences d'une première séquence de préambule de N impulsions espacées d'une période T et qui sont chacune égale à une impulsion de référence pondérée par un coefficient complexe $c_n$, n = 0 à N-1 indiquant le rang de l'impulsion dans la première séquence, ledit préambule comprenant en outre une deuxième partie de préambule d'au moins deux occurrences d'une deuxième séquence de préambule égale à la conjuguée de la première séquence :

i/ échantillonnage du préambule avec une période d'échantillonnage $T_s$, $T = P \times T_s$ avec P nombre entier supérieur ou égal à 1 ;
ii/ considérant les NP échantillons successifs $s_n$ pour n=0 à NP-1, d'une tranche, de durée NT, de première partie de préambule d'un paquet de signal reçu, détermination de la séquence de valeurs,

$$x_n = c^*_{\lfloor \frac{n}{P} \rfloor} s_n$$ ;

iii/ considérant les NP échantillons successifs $z_n$ pour n=0 à NP-1, d'une tranche, de durée NT, de deuxième partie de préambule d'un paquet de signal reçu, détermination de la séquence de valeurs $y_n = c_{\left|\frac{n}{P}\right|} z_n$ ;

iv/ détermination de la fréquence $f_d$ de la séquence $x_n$ et de la fréquence $f_g$ de la séquence $y_n$ avec n=0 à NP-1 ;

v/ calcul d'au moins un décalage à appliquer pour la synchronisation sur le signal reçu parmi un décalage fréquentiel $\Delta f$ et un décalage temporel $t_{0m}$ en fonction des équations suivantes :

$$f_d = \frac{1}{NPT_s}\left(\left\lfloor\frac{t_{0m}}{T}\right\rfloor + \epsilon\right) + \Delta f$$

$$f_g = -\frac{1}{NPT_s}\left(\left\lfloor\frac{t_{0m}}{T}\right\rfloor + \epsilon\right) + \Delta f$$

où

$$\epsilon = \begin{cases} 0 \ \text{si}\ \frac{n}{P} - \left\lfloor\frac{n}{P}\right\rfloor \geq \frac{t_{0m}}{T} - \left\lfloor\frac{t_{0m}}{T}\right\rfloor \\ 1 \ \text{sinon} \end{cases}$$

vi/ étape de synchronisation en fonction d'au moins ledit décalage calculé.

Un tel procédé permet de réaliser une synchronisation à faible SNR (utilisant donc de longues séquences, et donnant lieu à l'accumulation d'un nombre important d'impulsions) même en présence d'offset de fréquence.

Dans des modes de réalisation, un tel procédé comprendra en outre l'une au moins des caractéristiques suivantes :

- le dispositif récepteur met en oeuvre les étapes suivantes :

  - effectuer une Transformée de Fourier Discrète, nommée TFD, des $x_n$ pour n = 0 à NP-1 déterminés pour une tranche indicée $k_d$, puis déterminer $n_d = \arg\max_{n_0}\left(\max_m\left|X_m^{k_d,n_0}\right|\right)$, où $X_m^{k_d,n_0} = TFD\left(x_{nP+n_0}^{k_d}\right), n_0 \in [\![0; P-1]\!]$ et ensuite déterminer l'indice $m_d \in [\![0; N-1]\!]$ du maximum du module de $X_m^{k_d,n_d}$, i.e. $m_d = \arg\max_m\left|X_m^{k_d,n_d}\right|$ ;

  - déterminer une estimation, $\hat{f}_d$, de la valeur de la fréquence $f_d$ avec $\hat{f}_d = \begin{cases} \frac{m_d}{NT} \ \text{si}\ m_d < \frac{N}{2} \\ \frac{m_d}{NT} - \frac{1}{T_s} \ \text{si}\ m_d \geq \frac{N}{2} \end{cases}$ ;

  - effectuer une Transformée de Fourier Discrète, nommée, TFD des $y_{nP+n_d}^{k_g}$, pour n = 0 à NP-1, déterminés pour une tranche indicée $k_g$, puis étant donné $Y_m^{k_g,n_d} = TFD\left(y_{nP+n_d}^{k_g}\right), n_0 \in [\![0; P-1]\!]$ et ensuite déterminer l'indice $m_g \in [\![0; N-1]\!]$ du maximum du module de $Y_m^{k_g,n_d}$, i.e. $m_g = \arg\max_m\left|Y_m^{k_g,n_d}\right|$ ;

  - déterminer une estimation, $\hat{f}_g$, de la valeur de la fréquence $f_g$ avec $\hat{f}_g = \begin{cases} \frac{m_g}{NT} \ \text{si}\ m_g < \frac{N}{2} \\ \frac{m_g}{NT} - \frac{1}{T_s} \ \text{si}\ m_g \geq \frac{N}{2} \end{cases}$ ;

  - le dispositif récepteur détermine une estimation $\widehat{\Delta f}$ du décalage en fréquence $\Delta f$ à l'aide de la formule suivante :

$$\widehat{\Delta f} = \frac{\hat{f}_d + \hat{f}_g}{2} \; ;$$

si $m_d$ et $m_g$ n'ont pas la même parité, la valeur de celui de $m_d$ et $m_g$ dont la seconde valeur la plus grande de transformée de Fourier est la plus proche du maximum est alors modifiée, la valeur de l'index modifié étant fixée égale à l'index de cette seconde valeur ;

le dispositif récepteur met en oeuvre les étapes suivantes :

- calcul de $\Delta\varphi_0 = \arg\left(X_{m_d}^{k_d+1,n_d} conj\left(X_{m_d}^{k_d,n_d}\right)\right)$

- soit $m_{d2}$ l'indice voisin de $m_d$ tel que $\left|X_{m_d}^{k_d,n_d}\right|$ et $\left|X_{m_{d2}}^{k_d,n_d}\right|$ sont espacés de moins d'une valeur prédéfinie, la valeur de $\Delta\varphi$ est déterminée par application de :

> si $\Delta\varphi_0 < 0$ et $m_d$ - $m_{d2} < 0$ alors $\Delta\varphi = \Delta\varphi_0 + 2\pi$
> si $\Delta\varphi_0 > 0$ et $m_d$ - $m_{d2} > 0$ alors $\Delta\varphi = \Delta\varphi_0 - 2\pi$
> sinon $\Delta\varphi = \Delta\varphi_0$

- détermination d'une estimation $\widehat{\Delta f}$ du décalage en fréquence $\Delta f$ à l'aide de la formule suivante

$$\widehat{\Delta f} = \frac{\hat{f}_d + \hat{f}_g}{2} + \frac{\Delta\varphi}{2\pi NT} .$$

Suivant un autre aspect, l'invention décrit un programme d'ordinateur destiné à être stocké dans la mémoire d'un dispositif récepteur de télécommunications comprenant en outre un microcalculateur, ledit programme d'ordinateur comprenant des instructions qui, lorsqu'elles sont exécutées sur le microcalculateur, mettent en oeuvre les étapes i, ii, iii et iv d'un procédé selon le premier aspect de l'invention.

L'invention décrit également un support non transitoire lisible par ordinateur stockant un tel programme informatique.

Suivant un autre aspect, l'invention décrit un dispositif récepteur de télécommunications, adapté pour recevoir un signal radio impulsionnel à bande très large comprenant des paquets de données, un paquet de données comprenant un préambule, ledit dispositif récepteur étant adapté pour effectuer une opération de synchronisation sur le signal reçu en fonction dudit préambule ;

ledit dispositif étant caractérisé en ce que, le préambule comprenant une première partie de préambule d'au moins deux occurrences d'une première séquence de préambule de N impulsions espacées d'une période T et qui sont chacune égale à une impulsion de référence pondérée par un coefficient complexe $c_n$, n = 0 à N-1 indiquant le rang de l'impulsion dans la première séquence, ledit préambule comprenant en outre une deuxième partie de préambule d'au moins deux occurrences d'une deuxième séquence de préambule égale à la conjuguée de la première séquence, le dispositif est adapté pour échantillonner le préambule avec une période d'échantillonnage $T_s$, $T = P \times T_s$ avec P nombre entier supérieur ou égal à 1 ;

le dispositif est en outre adapté pour, considérant les NP échantillons successifs $s_n$ pour n=0 à NP-1, d'une tranche, de durée NT, de première partie de préambule d'un paquet de signal reçu, déterminer la séquence de valeurs,

$$x_n = c^*_{\left\lfloor\frac{n}{P}\right\rfloor} s_n \; ;$$

le dispositif est en outre adapté pour, considérant les NP échantillons successifs $z_n$ pour n=0 à NP-1, d'une tranche, de durée NT, de deuxième partie de préambule d'un paquet de signal reçu, déterminer la séquence de valeurs

$$y_n = c_{\left\lfloor\frac{n}{P}\right\rfloor} z_n \; ;$$

le dispositif est en outre adapté pour déterminer la fréquence $f_d$ de la séquence $x_n$ et de la fréquence $f_g$ de la séquence $y_n$ avec n=0 à NP-1 ;

le dispositif est en outre adapté pour calculer au moins un décalage à appliquer pour la synchronisation sur le signal reçu parmi un décalage fréquentiel $\Delta f$ et un décalage temporel $t_{0m}$ en fonction des équations suivantes :

$$f_d = \frac{1}{NPT_s}\left(\left\lfloor\frac{t_{0m}}{T}\right\rfloor + \epsilon\right) + \Delta f$$

$$f_g = -\frac{1}{NPT_s}\left(\left\lfloor\frac{t_{0m}}{T}\right\rfloor + \epsilon\right) + \Delta f$$

où

$$\epsilon = \begin{cases} 0 \ \text{si} \ \frac{n}{P} - \left\lfloor\frac{n}{P}\right\rfloor \geq \frac{t_{0m}}{T} - \left\lfloor\frac{t_{0m}}{T}\right\rfloor \\ \quad\quad 1 \ \text{sinon} \end{cases}$$

le dispositif étant en outre adapté pour effectuer une synchronisation en fonction d'au moins ledit décalage calculé.

Dans des modes de réalisation, un tel dispositif comprendra en outre l'une au moins des caractéristiques suivantes :

- ledit dispositif est adapté pour effectuer une Transformée de Fourier Discrète, nommée, TFD, des $x_n$ pour $n = 0$ à NP-1 déterminés pour une tranche indicée $k_d$, puis déterminer $n_d = \arg\max_{n_0}\left(\max_m\left|X_m^{k_d,n_0}\right|\right)$, où $X_m^{k_d,n_0} = TFD\left(x_{nP+n_0}^{k_d}\right)$, $n_0 \in [\![0; P-1]\!]$ et ensuite déterminer l'indice $m_d \in [\![0; N-1]\!]$ du maximum du module de $X_m^{k_d,n_d}$, i.e. $m_d = \arg\max_m\left|X_m^{k_d,n_d}\right|$ ;

ledit dispositif étant adapté pour déterminer une estimation, $\hat{f}_d$, de la valeur de la fréquence

$$f_d \ \text{avec} \ \hat{f}_d = \begin{cases} \frac{m_d}{NT} \ \text{si} \ m_d < \frac{N}{2} \\ \frac{m_d}{NT} - \frac{1}{T_s} \ \text{si} \ m_d \geq \frac{N}{2} \end{cases} ;$$

ledit dispositif étant adapté pour effectuer une Transformée de Fourier Discrète, nommée, TFD, des $y_{nP+n_d}^{k_g}$, pour $n = 0$ à NP-1, déterminés pour une tranche indicée $k_g$, puis étant donné $Y_m^{k_g,n_d} = TFD\left(y_{nP+n_d}^{k_g}\right)$, $n_0 \in [\![0; P-1]\!]$ et ensuite déterminer l'indice $m_g \in [\![0; N-1]\!]$ du maximum du module de $Y_m^{k_g,n_d}$, i.e. $m_g = \arg\max_m\left|Y_m^{k_g,n_d}\right|$ ;

ledit dispositif étant adapté pour déterminer une estimation, $\hat{f}_g$, de la valeur de la fréquence

$$f_g \ \text{avec} \ \hat{f}_g = \begin{cases} \frac{m_g}{NT} \ \text{si} \ m_g < \frac{N}{2} \\ \frac{m_g}{NT} - \frac{1}{T_s} \ \text{si} \ m_g \geq \frac{N}{2} \end{cases} ;$$

- ledit dispositif est adapté pour déterminer une estimation $\widehat{\Delta f}$ du décalage en fréquence $\Delta f$ à l'aide de la formule suivante : $\widehat{\Delta f} = \frac{\hat{f}_d + \hat{f}_g}{2}$ ;
- ledit dispositif est adapté pour, si $m_d$ et $m_g$ n'ont pas la même parité, modifier la valeur de celui de $m_d$ et $m_g$ dont la seconde valeur la plus grande de transformée de Fourier est la plus proche du maximum, la valeur de l'index modifié étant fixée égale à l'index de cette seconde valeur.

**Brève description des figures** :

L'invention sera mieux comprise et d'autres caractéristiques, détails et avantages apparaîtront mieux à la lecture de la description qui suit, donnée à titre non limitatif, et grâce aux figures annexées, données à titre d'exemple.

[Fig. 1] La figure 1 représente des étapes d'un procédé de synchronisation dans un mode de réalisation de l'invention ;

[Fig. 2] La figure 2 représente schématiquement un dispositif émetteur et un dispositif récepteur dans un mode de réalisation de l'invention ;

[Fig. 3] La figure 3 représente la structure d'un paquet de données dans un mode de réalisation de l'invention ;

[Fig. 4] La figure 4 schématise les impulsions d'un préambule d'un paquet dans un mode de réalisation de l'invention ;

[Fig. 5] La figure 5 représente une impulsion gaussienne de 500 MHz utilisée dans un mode de réalisation de l'invention ;

[Fig. 6] La figure 6 représente les transformées de Fourier des séquences $x_{nP+n_0}^{k_d}$ dans un mode de réalisation de l'invention ;

[Fig. 7] La figure 7 représente la fonction de répartition complémentaire empirique de l'erreur d'estimation de l'écart de fréquence dans un mode de réalisation de l'invention ;

[Fig. 8] La figure 8 représente l'erreur de synchronisation temporelle dans un mode de réalisation de l'invention.

Des références identiques peuvent être utilisées dans des figures différentes lorsqu'elles désignent des éléments identiques ou comparables.

**Description détaillée** :

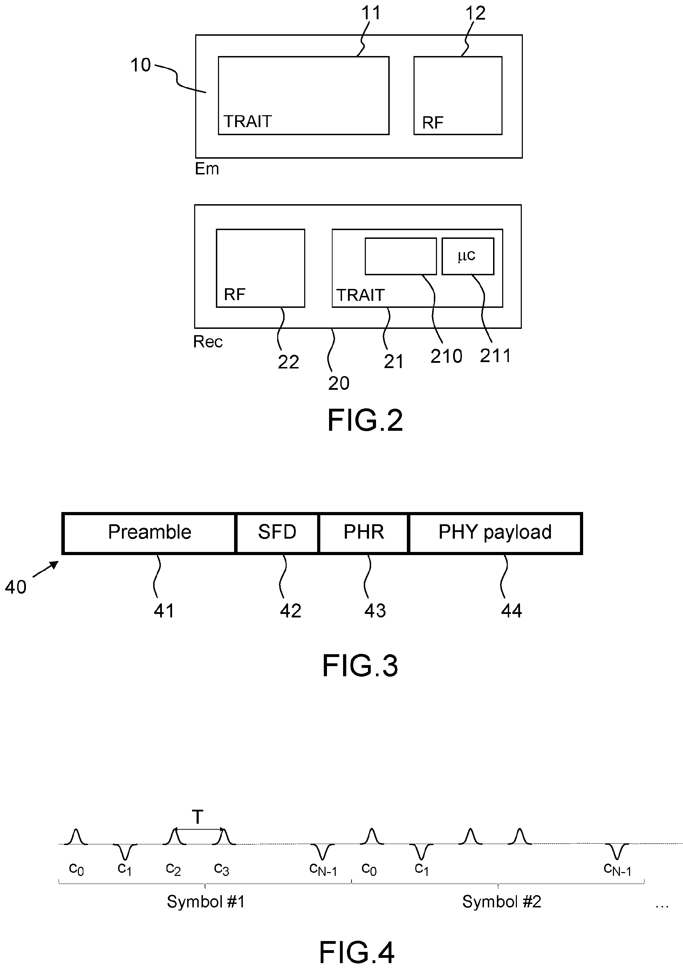

En figure 2, un dispositif émetteur 10 et un dispositif récepteur 20 adaptés pour mettre en oeuvre des télécommunications IR-UWB dans un mode de mise en oeuvre de l'invention sont représentés.

Le dispositif émetteur 10, appelé ci-après émetteur 10, comporte un module de traitement électronique 11 et un module radiofréquence (RF) 12. Le module de traitement électronique 11 comporte une mémoire et un microcontrôleur (non représentés). Typiquement, le module de traitement 11 de l'émetteur est adapté pour effectuer notamment les traitements suivants : application de codes correcteurs d'erreurs, entrelacement des données, transformation de séquences de bits en symboles, mise en trame, application de filtres de mise en forme des impulsions. Le module RF 12 de l'émetteur 10 est adapté pour effectuer les traitements suivants : transposer le signal depuis la bande de base vers la fréquence porteuse, amplifier et filtrer le signal et émettre un signal radio IR-UWB via une antenne RF. La mémoire stocke des instructions, qui, lorsqu'exécutées sur le microcontrôleur, mettent en oeuvre celles (ou certaines) des étapes relevant du module de traitement 11 de l'émetteur 10 et exposées ci-dessous.

Similairement le dispositif récepteur 20, appelé ci-après récepteur 20, comporte un module de traitement électronique 21 et un module radiofréquence 22. Le module de traitement électronique 21 comporte une mémoire 210 et un microcontrôleur 211. Typiquement, le module RF 22 du récepteur 20 est adapté pour effectuer les traitements de transposition en bande de base du signal reçu de filtrage et d'amplification du signal reçu. Le module de traitement 21 du récepteur 20 est notamment adapté pour effectuer les traitements suivants tels qu'un échantillonnage à la période $T_s$, un filtrage, un découpage en tranches, une multiplication des tranches par une séquence prédéfinie, un estimateur de fréquence, une correction de l'écart de fréquence porteuse et du décalage temporel, une transformation des symboles reçus en une métrique d'entrée pour le décodage correcteur d'erreur (typiquement les LLR pour Log Likelihood Ratio), le désentralacement, le décodage. La mémoire 210 stocke des instructions, qui, lorsqu'exécutées sur le microcontrôleur 211, mettent en oeuvre notamment celles (ou certaines) des étapes relevant du module de traitement 21 du récepteur 20 et exposées ci-dessous.

Les télécommunications IR-UWB mises en oeuvre entre l'émetteur 10 et le récepteur 20 sont par exemple conformes à la définition généralement retenue, à savoir : un signal UWB (signal dont soit le rapport largeur de bande / fréquence porteuse est supérieur à 20%, soit la largeur de bande est supérieure à 500 MHz) fait d'impulsions de courte durée (ces impulsions ont une durée qui correspondent à la largeur de bande du signal : de l'ordre de 2ns pour du 500 MHz, 1ns pour du 1 GHz etc.).

La figure 3 représente la structure générale, au niveau de la couche physique, d'un paquet de données 40 émis dans un signal IR-UWB émis par l'émetteur 10 et reçu par le récepteur 20 dans un mode de mise en oeuvre de l'invention.

Le paquet 40, dont le format est par exemple conforme au standard IEEE802.15.4 tel que cité plus haut commence par un préambule (Preamble 41) qui est utilisé par le récepteur 20 pour la détection du paquet, la synchronisation temporelle et la synchronisation fréquentielle. Le champ SFD 42, pour l'anglais « Start of Frame delimiter», permet de déterminer la fin du préambule. Le champ PHR 43, pour l'anglais « PHY Header » contient des données sur le paquet comme la taille des données présentes dans le champ PHY payload 44. Le champ PHY payload 44 contient les données utiles du point de vue de la couche physique.

Le préambule selon l'invention comprend une première partie de préambule comprenant (dans le cas présent, formée de) la répétition d'un symbole et une deuxième partie de préambule comprenant (dans le cas présent, formée de) la répétition d'un autre symbole. Chacun de ces symboles comprend (ici est formé de) une séquence respective d'impulsions, chaque impulsion dans la séquence étant égale à une impulsion de référence pondérée par un coefficient complexe.

Les principes généraux d'un procédé de synchronisation selon l'invention sont maintenant exposés.

Pour la (n+1)^{ème} impulsion dans le symbole considéré dans la première partie de préambule, le coefficient complexe de pondération a pour valeur $c_n = \exp\left(-\frac{i\pi n^2}{N}\right)$, pour $n \in [\![0, N-1]\!]$ avec $N$ la taille de la séquence d'impulsions constituant le symbole.

La figure 4 représente des impulsions de la première partie de préambule, pondérées chacune par leur coefficient $c_n$ complexe associé, dans un mode de réalisation considéré à titre d'illustration (sur le schéma, les coefficients ne sont que des +/-1 pour simplifier la représentation).

Soit $p(t)$ la forme d'onde utilisée pour l'impulsion de référence, $T$ la distance entre deux impulsions consécutives appelée PRP (pour Pulse Répétition Period en anglais). Un symbole de la première partie de préambule s'écrit alors :

$$u(t) = \sum_{n=0}^{N-1} c_n p(t - nT)$$

La première partie $v(t)$ de préambule 44 émis par l'émetteur 10 contient M répétitions de ce symbole, avec M supérieur ou égal à 2 :

$$v(t) = \sum_{k=0}^{M-1} u(t - kNT)$$

$$= \sum_{k=0}^{M-1} \sum_{n=0}^{N-1} c_n p(t - (kN + n)T)$$

Le signal reçu par le récepteur 20 a subi le canal de propagation $h(t)$ et le bruit du récepteur $n(t)$, donc la première partie de préambule reçue est :

$$r(t) = h * u(t) + n(t)$$

$$= \sum_{k=0}^{M-1} \sum_{n=0}^{N-1} c_n p_h(t - (kN + n)T) + n(t)$$

où $p_h(t)$ est la convolution de la forme d'onde avec le canal : $p_h(t) = h*p(t)$

De plus, le récepteur 20 n'étant pas parfaitement aligné en fréquence avec l'émetteur 10 , un terme d'offset de fréquence $\Delta f$ est pris en compte, ainsi qu'un terme de phase $\phi$ et une origine des temps $t_0$ :

$$s(t) = r(t - t_0) \exp(2i\pi\Delta f t + i\phi)$$

Enfin le signal est échantillonné par le récepteur 20, avec une période $T_s$ :

$$s_n = s(nT_s)$$

On suppose que $T_s$ est un sous-multiple de $T$ : $T = P \times T_s$ ( $P$ est le nombre d'échantillons par PRP)

Le signal est en outre découpé en tranches de durée $NT$ (la durée d'un symbole), par le récepteur 20 :

$$w_n^k = s_{n+kNP}$$

où $k$ est le numéro de la tranche et $n$ l'indice à l'intérieur de la tranche (n $\in$ $[\![0; NP-1]\!]$ ).

Soit le vecteur $d$ de taille $N \times P$ dont les composantes $d_n$ sont les $c_n$ répétés P fois :

$$d = [c_0, c_0, \dots, c_0, c_1, \dots, c_1, \dots, c_{N-1}, \dots, c_{N-1}]^T$$

Le résultat du produit terme à terme de chaque tranche $w^k$ par le conjugué de d est :

$$x^k = w^k \cdot d^*$$
$$= [c_0^* s_{kNP}, c_0^* s_{1+kNP}, \dots, c_{N-1}^* s_{NP-1+kNP}]^T$$

Ou encore, exprimé plus simplement la n+1 ème composante de ce vecteur s'écrit :

$$x_n^k = c_{\lfloor \frac{n}{P} \rfloor}^* s_{n+kNP}$$

En reprenant les expressions précédentes :

$$x_n^k = c_{\lfloor \frac{n}{P} \rfloor}^* \left( \sum_{l=0}^{M-1} \sum_{m=0}^{N-1} c_m p_h \big((n+kNP)T_s - t_0 - (lN+m)T\big) + n\big((n+kNP)T_s\big) \right) \exp(2i\pi\Delta f(n+kNP)T_s + i\phi)$$

$$= c_{\lfloor \frac{n}{P} \rfloor}^* \left( \sum_{l=0}^{M-1} \sum_{m=0}^{N-1} c_m p_h \big(nT_s + (k-l)NT - t_0 - mT\big) + n\big((n+kNP)T_s\big) \right) \exp(2i\pi\Delta f(n+kNP)T_s + i\phi)$$

Si on suppose que le support de $p_h(t)$ est plus court que la PRP (sinon on peut assimiler l'interférence résiduelle à du bruit et l'intégrer dans n(t)), c'est-à-dire que son support est dans[0;T[, un seul terme (au plus) de la double somme est non nul, il s'agit de celui qui vérifie :

$$0 \leq nT_s + (k-l)NT - t_0 - mT < T$$

Ce qui revient à :

$$m = \left\lfloor \left( \frac{n}{P} + (k-l)N \right) - \frac{t_0}{T} \right\rfloor$$

avec *l* tel que $\left\lfloor \left( \frac{n}{P} + (k-l)N \right) - \frac{t_0}{T} \right\rfloor \in [0; N-1]$ (si la solution pour *l* n'est pas dans [0, M-1], on n'est pas dans le préambule).

On a donc :

$$x_n^k = c_{\left\lfloor \frac{n}{P} \right\rfloor}^* \times \left( c_{\left| \left( \frac{n}{P} + (k-l)N \right) - \frac{t_0}{T} \right|} p_h(nT_s + (k-l)NT - t_0 - mT) + n\big((n+kNP)T_s\big) \right) \times$$

$$\exp(2i\pi\Delta f(n+kNP)T_s + i\phi)$$

De façon générale, la suite $c_n^* c_{n-\Delta}$ a un incrément de phase de $\dfrac{2\pi\Delta}{N}$, même en considérant un modulo $N$ pour les effets de bord si $N$ est pair (i.e. lorsque $n - \Delta < 0$ ou $n - \Delta > N - 1$), ce qui correspond à une fréquence de $\dfrac{\Delta}{NT_s}$.

En appliquant cela à notre cas, en sous-échantillonnant d'un facteur P, $\Delta = \left\lfloor \frac{n}{P} \right\rfloor - \left\lfloor \frac{n}{P} - \frac{t_{0m}}{T} \right\rfloor$ (avec $t_{0m} = t_0$ [NT]).

on a alors :

$$\Delta = \left\lfloor \frac{t_{0m}}{T} \right\rfloor + \epsilon$$

où :

$$\epsilon = \begin{cases} 0 \text{ si} \dfrac{n}{P} - \left\lfloor \dfrac{n}{P} \right\rfloor \geq \dfrac{t_{0m}}{T} - \left\lfloor \dfrac{t_{0m}}{T} \right\rfloor \\ 1 \text{ sinon} \end{cases}$$

En prenant en compte l'offset de fréquence, la fréquence $f_d$ de la séquence $x_n^k$ (pour une valeur de k fixée, et n variant de 0 à NP-1) est :

$$f_d = \frac{1}{NPT_s}\left( \left\lfloor \frac{t_{0m}}{T} \right\rfloor + \epsilon \right) + \Delta f$$

L'estimation de $f_d$ permet d'avoir une relation entre $t_0$ et $\Delta$f.

Selon l'invention, la deuxième partie de préambule émise à la suite de la première partie de préambule comprend un symbole répété égal au conjugué, $u^*(t)$, du symbole $u(t)$ et en considérant ce symbole conjugué à la place du précédent, on obtient les $y_n^k$, similairement à ce qui a été décrit en référence à la première partie de préambule, en multipliant par $d$ au lieu de $d^*$:

$$y_n^k = c_{\left\lfloor \frac{n}{P} \right\rfloor} \times \left( c_{\left| \left( \frac{n}{P} + (k-l)N \right) - \frac{t_0}{T} \right|}^* p_h(nT_s + (k-l)NT - t_0 - mT) + n\big((n+kNP)T_s\big) \right)$$
$$\times \exp(2i\pi\Delta f(n+kNP)T_s + i\phi)$$

En fonction des $y_n^k$, l'équivalent de $f_d$, que l'on nomme $f_g$, est obtenu, i.e. la fréquence des $y_n^k$ :

$$f_g = -\frac{1}{NPT_s}\left( \left\lfloor \frac{t_{0m}}{T} \right\rfloor + \epsilon \right) + \Delta f$$

La connaissance de $f_d$ et $f_g$ permet de remonter à la valeur de $t_0$ et/ou la valeur de $\Delta$f (plus exactement $t_{0m}$ : pour la synchronisation temporelle sur le préambule, c'est ce que l'on recherche), pour mettre en oeuvre la synchronisation temporelle (en fonction de $t_{0m}$) et/ou la synchronisation fréquentielle (en fonction de $\Delta$f).

Pour éviter les ambiguïtés sur l'estimation de $\Delta$f, il faut avoir une rotation de phase entre deux impulsions

inférieure à $\pi$ en valeur absolue, ce qui correspond à $|\Delta f| < \frac{1}{2T}$ .

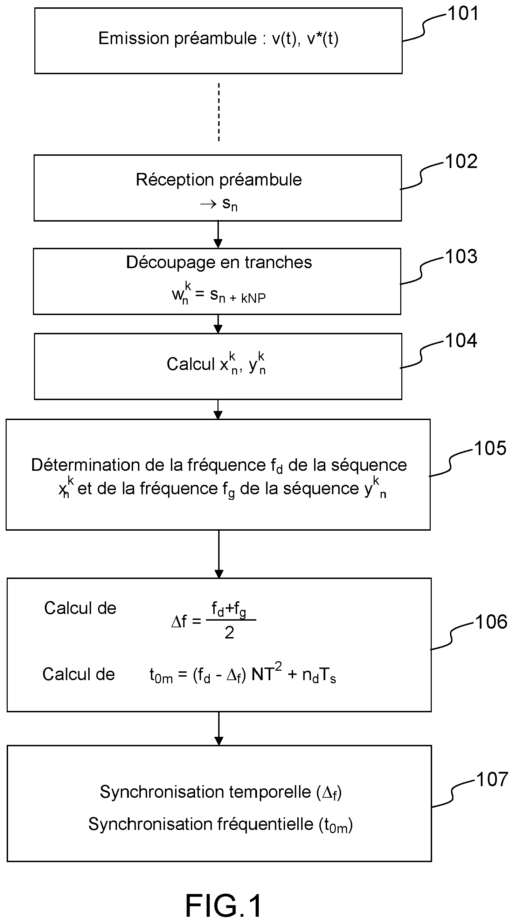

La figure 1 représente les étapes d'un procédé de synchronisation dans un mode de réalisation de l'invention, exploitant les principes généraux exposés ci-dessus.

Dans une étape 101, l'émetteur 10 construit et émet un signal IR-UWB dans lesquels les paquets de données comportent chacun un préambule, comprenant une première partie de préambule v(t) répétant M fois, avec M supérieur ou égal à 2, le symbole u(t)) et comprenant à la suite de la première partie de préambule, une deuxième partie de préambule répétant M' fois, avec M' supérieur ou égal à 2) le symbole u*(t). Quand M est pris égal à M', la deuxième partie de préambule est égale à v*(t).

Dans une étape 102, le module RF 22 du récepteur 20 reçoit les paquets issus de cette émission et les transposent en bande de base. En utilisant les mêmes appellations que celles utilisées dans l'exposé des principes généraux de l'invention ci-dessus, le module de traitement 21 après échantillonnage ($T_s$) obtient les valeurs $s_n$ en fonction de la première partie de préambule d'un paquet considéré.

Dans une étape 103, un découpage en tranches de ces valeurs successives de $s_n$ est effectué par le module de traitement 21, qui détermine alors, pour au moins une tranche de taille NP, les valeurs $w_n^k = s_{n+kNP}$ où k est le numéro de la tranche considérée et n l'indice à l'intérieur de la tranche ( $n \in [\![0; NP-1]\!]$ ).

Dans une étape 104, le module de traitement 21 calcule $x^k = w^k$ - d* et détermine ainsi les $x_n^k$ , pour au moins une tranche (la tranche indicée k) et pour n = 0 à NP-1.

Les traitements indiqués ci-dessus dans les étapes 102-104 relativement à la première partie de préambule sont effectuées aussi relativement à la deuxième partie de préambule : le module de traitement 21 détermine ainsi les $y_n^{k'}$ , pour au moins une tranche (indicée k') et pour n = 0 à NP-1 (k' peut être choisi égal ou non à k).

Dans une étape 105, le module de traitement 21 détermine la fréquence $f_d$ de la séquence xk

La fréquence $f_d$ est, suivant les modes de réalisation, déterminée en fonction d'une seule tranche des $x_n^k$ ou bien de plusieurs des tranches (par exemple par moyennage des différentes valeurs de fréquence obtenues sur différentes tranches), ce qui améliore la précision de l'estimation déterminée. Il en va de même pour la fréquence $f_g$ relativement aux $y_n^k$ . Il existe diverses méthodes pour déterminer ces fréquences : utilisation de la transformée de Fourier Discrète décrite plus bas ou calcul de la variation de phase moyenne entre deux PRP (par argument de la moyenne des produits complexes conjugués des échantillons espacés d'une PRP) et division par $2\pi T$ etc.

Dans une étape 106, le module de traitement 21 calcule alors au moins l'un des paramètres $\Delta f$ et $t_{0m}$, en fonction des valeurs des fréquences $f_d$ et $f_g$ obtenues à l'étape 105 et du système d'équations suivant :

$$f_d = \frac{1}{NPT_s}\left(\left\lfloor\frac{t_{0m}}{T}\right\rfloor + \epsilon\right) + \Delta f$$

$$f_g = -\frac{1}{NPT_s}\left(\left\lfloor\frac{t_{0m}}{T}\right\rfloor + \epsilon\right) + \Delta f$$

$\varepsilon$ tel que défini plus haut (dans le cas décrit plus bas, c'est l'estimation de n qui va donner $\varepsilon$, le n venant de la FFT qui aura le plus fort signal. En pratique, le n qui nous intéresse est sur l'impulsion. Le support de p(t) commence avant l'impulsion, le $t_0$ est par rapport au début du support donc nécessairement la partie fractionnaire de $t_0/T$ sera plus petite que celle de $n/P$ et donc on aura toujours $\varepsilon = 0$).

Puis le module de traitement 21 effectue au moins une étape de synchronisation 107 par rapport au paquet considéré, parmi une synchronisation fréquentielle en fonction de la valeur obtenue pour $\Delta f$ et une synchronisation temporelle en fonction de la valeur obtenue pour $t_{0m}$.

La synchronisation fréquentielle peut être réalisée en appliquant une correction sur la phase des échantillons reçus $s_n$ par exemple en les multipliant par $\exp\left(\frac{2i\pi\Delta f_{est}n}{T_s}\right)$ ; la synchronisation temporelle en décalant les échantillons reçus temporellement.

Des traitements ultérieurs sont ensuite réalisés dans un mode de réalisation, une fois la synchronisation effectuée sur le paquet reçu, en fonction de ce traitement sur son préambule : décodage des données dans le champ Payload 44, mesure de temps d'arrivée (à des fins de localisation) en fonction de symboles prédéfinis présents dans le paquet ...

La présente invention permet de réaliser une synchronisation à faible SNR (utilisant donc de longues séquences, et donnant lieu à l'accumulation d'un nombre important d'impulsions) en présence de niveaux d'offset de fréquence (CFO pour « central frequency offset) classiques, typiquement de l'ordre de 20 ou 40 ppm.

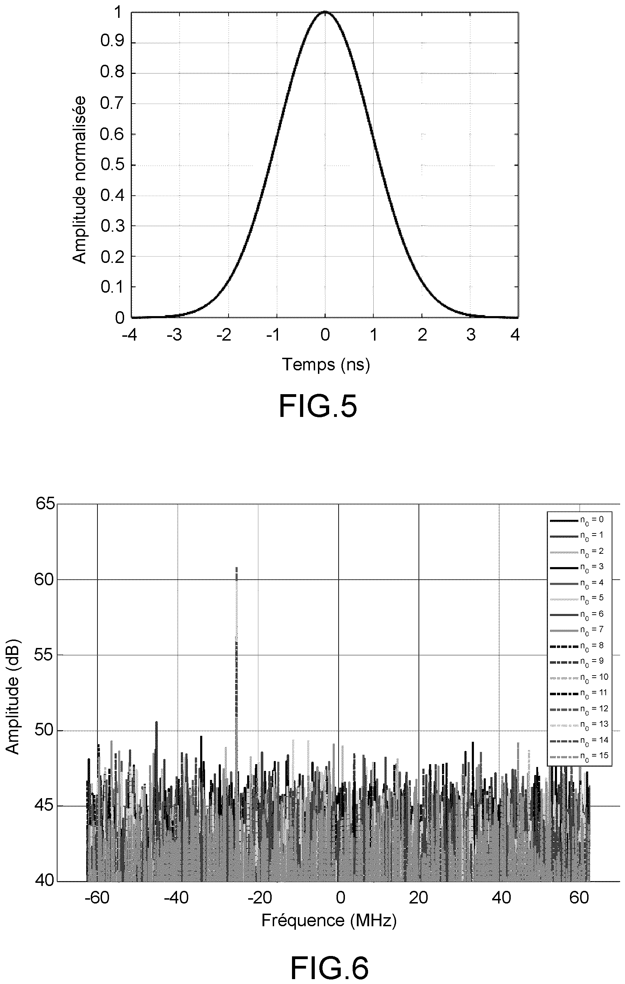

A titre d'exemple dans le cadre d'une application numériques, $N$ = 1024, $T$ = 8 ns, $T_s$ = 500 ps et l'impulsion gaussienne a une largeur de bande 500 MHz à -10dB, comme représenté en figure 5 :

$$p(t) = A \exp\left(-\left(\frac{t}{\tau}\right)^2\right)$$

où $A$ est l'amplitude et $\tau$ = 1.37 ns (pour avoir une bande de 500 MHz).

Dans un mode de réalisation, le module de traitement 21 estime les valeurs de $f_d$ et $f_g$ à l'aide d'une transformée de Fourier discrète (une étape de détection de la présence du préambule peut être incluse en comparant à un seuil les valeurs de transformée de Fourier obtenues comme exposé ci-après). Pour $k$ donné, la séquence $x_n^k$ a une longueur $NP$, donc les séquences sous-échantillonnées $x_{nP+n_0}^k$ ont une longueur $N$ ( $n_0 \in [\![0; P-1]\!]$ ).

Soit TFD la fonction de transformée de Fourier :

$$X_m^{k_d,n_0} = TFD\left(x_{nP+n_0}^{k_d}\right)$$

$m \in [\![0; N-1]\!]$ (Transformée de Fourier discrète d'une séquence de longueur N)

où $k_d$ correspond à une tranche.

Soit $n_d$, la valeur de $n_0$ tel que le maximum de $X_m^{k_d,n_0}$ soit le maximum sur les $n_0$ des maxima sur les m :

$$n_d = \arg\max_{n_0}\left(\max_m\left|X_m^{k_d,n_0}\right|\right)$$

Cela revient à choisir le décalage du sous-échantillonnage qui échantillonne les impulsions sur leur maximum.

La figure 6 représente, avec en abscisse les fréquences et en ordonnée l'amplitude, les transformées de Fourier des séquences $x_{nP+n_0}^{k_d}$ (ici $n_d$ = 12 et $\hat{f}_d$ = -25.4 MHz).

Soit $m_d \in [\![0; N-1]\!]$ l'indice du maximum du module de $X_m^{k_d,n_d}$ :

$$m_d = \arg\max_m\left|X_m^{k_d,n_d}\right|$$

$m \in [\![0; N-1]\!]$ Dans un mode de réalisation, la valeur du maximum peut servir de détection du préambule comme mentionné plus haut, en le comparant à un seuil.

Le module de traitement 21 détermine une estimation de $f_d$ :

$$\hat{f}_d = \begin{cases} \frac{m_d}{NT} & \text{si } m_d < \frac{N}{2} \\ \frac{m_d}{NT} - \frac{1}{T_s} & \text{si } m_d \geq \frac{N}{2} \end{cases}$$

Le module de traitement 21 fait de même sur la deuxième partie (correspondant au symbole conjugué) du préambule. L'estimation de $n_d$ est toujours valable donc on calcule directement :

$$Y_m^{k_g,n_d} = TFD\left(x_{nP+n_d}^{k_g}\right)$$

où $k_g$ correspond à une tranche où on est en présence de la séquence conjuguée. Le fait d'être en présence de la séquence conjuguée peut se faire en comparant la valeur du maximum du module de la transformée de Fourier à un seuil.

Soit $m_g \in [\![0; N-1]\!]$, l'indice du maximum du module de $Y_m^{k_g,n_d}$ :

$$m_g = \arg\max_m \left|Y_m^{k_g,n_d}\right|$$

Le module de traitement 21 détermine alors une estimation de $f_g$ :

$$\hat{f}_g = \begin{cases} \frac{m_g}{NT} \text{ si } m_g < \frac{N}{2} \\ \frac{m_g}{NT} - \frac{1}{T_s} \text{ si } m_g \geq \frac{N}{2} \end{cases}$$

De ces estimations, on déduit l'estimation de l'offset de fréquence :

$$\widehat{\Delta f} = \frac{\hat{f}_d + \hat{f}_g}{2}$$

Les estimations de $f_d$ et $f_g$ sont réalisées modulo $1/T$ (Transformée de Fourier d'un signal échantillonné avec la période $PT_s = T$), donc l'estimation de $\widehat{\Delta f}$ est modulo $1/2T$, donc pour ne pas avoir d'ambiguïté : il faut que $|\Delta f| < 1/4T$.

Dans l'exemple ci-dessus, P TFD sont effectuées (une pour chaque $n_0$ de 0 à P-1). Dans d'autres modes de réalisation, un nombre quelconque de TFD, supérieur ou égal à 1 et strictement inférieur à P est seulement effectué et pris en compte pour les estimations, sacahnt que plus ce nombre est proche de P, meilleure sera la précision de l'estimation.

Avec T = 8 ns, il est obtenu $|\Delta f| < 31$ MHz. Pour une fréquence centrale autour de 10 GHz (cas du canal le plus haut de "IEEE Standard for Low-Rate Wireless Networks," in IEEE Std 802.15.4-2020 (Révision of IEEE Std 802.15.4-2015) , vol., no., pp.1-800, 23 July 2020), l'offset relatif est de 3100 ppm (les oscillateurs classiquement utilisés sont meilleurs que quelques dizaines de ppm). L'offset de fréquence supporté ne dépend que de $T$ et pas de $N$. Cela permet d'utiliser de longues séquences pour supporter de faibles SNR. Inversement, si on veut pouvoir supporter 40 ppm, cela autorise des distances entre impulsions allant jusqu'à 625 ns.

Pour améliorer la précision, plusieurs techniques peuvent être utilisées en complément dans des modes de réalisation :

Tout d'abord, les indices $m_d$ et $m_g$ doivent théoriquement être de même parité. En effet, si $t_{0m}$ est nul, on aurait $f_d$ et $f_g$ égaux. Lorsque $t_{0m}$ augmente de $T$, alors $m_d$ augmente de 1 et $m_g$ diminue de 1 et donc ils gardent la même parité.

Donc si $m_d$ et $m_g$ n'ont pas la même parité, la valeur de celui dont la seconde valeur la plus grande de transformée de Fourier (i.e. la seconde valeur la plus grande parmi les $\left|X_m^{k_d,n_0}\right|$ pour $m_d$ et la seconde valeur la plus grande parmi les $\left|Y_m^{k_g,n_0}\right|$ pour $m_g$) est la plus proche du maximum est alors modifiée. La valeur de l'index retenue (i.e. la valeur de celui retenu parmi $m_d$ et $m_g$) sera celle de l'index de cette seconde valeur. Par exemple, si $m_d = 2$ et $m_g = 7$, il est calculé

$$\begin{cases} D_{dg} = \left|X_2^{k_d,n_0}\right| - \left|X_1^{k_d,n_0}\right| \\ D_{dd} = \left|X_2^{k_d,n_0}\right| - \left|X_3^{k_d,n_0}\right| \\ D_{gg} = \left|Y_7^{k_g,n_0}\right| - \left|Y_6^{k_g,n_0}\right| \\ D_{gd} = \left|Y_7^{k_g,n_0}\right| - \left|Y_8^{k_g,n_0}\right| \end{cases}$$

. Si par exemple, $D_{dd}$ est la plus petite des quatre différences, $m_d$ sera corrigée pour lui donner la valeur 3 au lieu de 2, $m_g$ restera à 7. De même, si c'est $D_{gg}$ qui est la plus petite, $m_g$ sera corrigée pour lui donner la valeur de 6 au lieu de 7 et $m_d$ restera inchangé. Attention aux effets de bord : le voisin de gauche de 0 est $N$ - 1, le voisin de droite de $N$ - 1 est 0.

Ensuite la résolution de l'estimateur de $f_d$ et $f_g$ (ici le pas de la transformée) est de $1 / NT_s$. Pour améliorer cela et donc améliorer la résolution de $\widehat{\Delta f}$ en allant chercher la partie fractionnaire de l'indice du maximum de la transformée de Fourier, la rotation de phase entre deux transformée de Fourier successives (il faut alors que M soit supérieur ou égal à 3) est calculée pour l'index $m_d$ :

$$\Delta\varphi_0 = \arg\left(X_{m_d}^{k_d+1,n_d} conj\left(X_{m_d}^{k_d,n_d}\right)\right)$$

La partie fractionnaire recherchée est $\Delta\varphi_0/2\pi$

Pour prendre en compte cette partie fractionnaire, il faut faire attention au cas où la fréquence $f_d$ tombe au milieu de deux fréquences de transformée de Fourier. Cela peut être détecté de deux façons : soit $|\Delta\varphi_0|$ est proche de $\pi$, soit $\left|X_{m_d}^{k_d,n_d}\right|$ est proche de $\left|X_{m_d+1}^{k_d,n_d}\right|$ ou $\left|X_{m_d-1}^{k_d,n_d}\right|$. Il faut que le signe de $\Delta\varphi_0$ soit cohérent avec l'indice du second maximum. Sinon le module de traitement 21 ajoute ou soustrait $2\pi$ à $\Delta\varphi_0$. Soit $m_{d2}$ l'indice voisin ($m_{d2}$ vaut soit $m_d$ - 1, soit $m_d$ + 1 en faisant attention aux effets de bord (on est modulo N) de $m_d$ tel que $\left|X_{m_d}^{k_d,n_d}\right|$ et $\left|X_{m_{d2}}^{k_d,n_d}\right|$ sont proches (i.e. leur différence est inférieure à un seuil fixé, par exemple à moins de 0.3 en relatif), le module de traitement applique les règles suivantes (en faisant toutefois attention aux effets de bord : si $m_d$ vaut N-1 et $m_{d2}$ vaut 0, on considère que la différence vaut -1 et pas N-1 (0 et N-1 sont distants de 1)) :

Si

$$\Delta\varphi_0 < 0 \text{ et } m_d - m_{d2} < 0 \text{ alors } \Delta\varphi = \Delta\varphi_0 + 2\pi$$

Si

$$\Delta\varphi_0 > 0 \text{ et } m_d - m_{d2} > 0 \text{ alors } \Delta\varphi = \Delta\varphi_0 - 2\pi$$

Sinon $\Delta\varphi = \Delta\varphi_0$

L'estimation finale de décalage en fréquence effectuée par le module de traitement est alors :

$$\widehat{\Delta f} = \frac{\hat{f}_d + \hat{f}_g}{2} + \frac{\Delta\varphi}{2\pi NT}$$

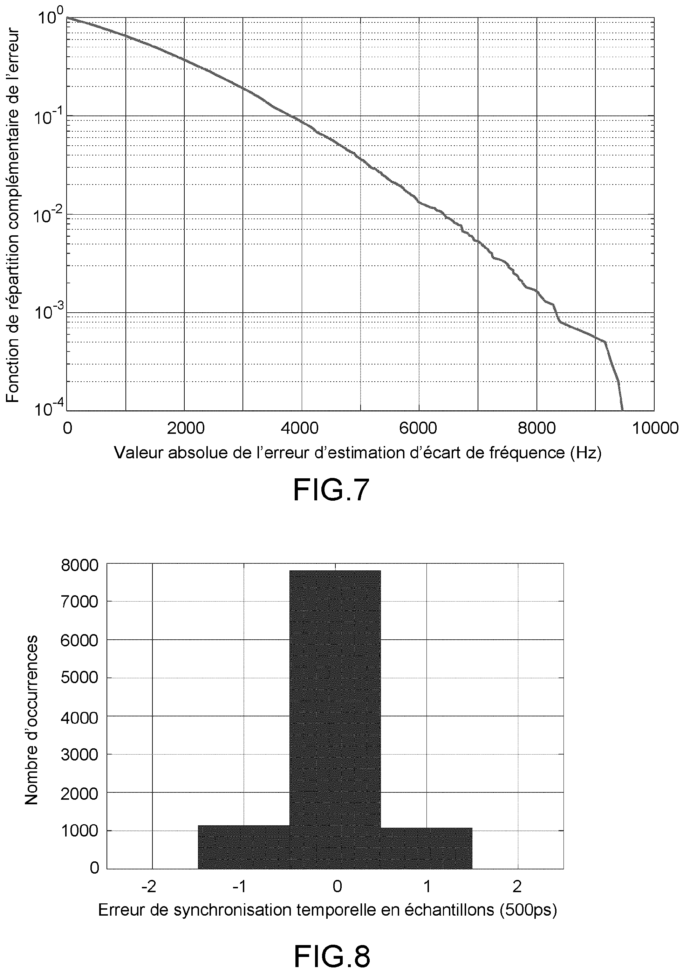

Les performances sont illustrées sur la figure 7. Elles sont obtenues à partir d'une simulation sur 10000 tirages avec des écarts de fréquences induisant des rotations de phase jusqu'à $10\pi$ sur une séquence (soit 610 kHz) répartis uniformément. Le SNR est de -10dB au niveau d'une impulsion (canal à bruit blanc additif gaussien). Les autres valeurs numériques sont celles indiquées en début de partie. Ainsi il ressort de la figure 7 que l'erreur d'estimation est inférieure à 6400 Hz dans 99% des cas.

L'estimation de la synchronisation temporelle se déduit de l'estimation de fréquence :

$$\left\lceil \frac{\widehat{t_{0m}}}{T} \right\rceil = \left(f_d - \widehat{\Delta f}\right)NPT_s - \epsilon$$

On peut considérer $\varepsilon$ toujours nul (cf. plus haut). La partie fractionnaire de $t_{0m}/T$ est donnée par $n_d$. Ainsi l'estimation de $t_{0m}$ est donnée par :

$$\hat{t}_{0m} = \left(\hat{f}_d - \widehat{\Delta f}\right)NT^2 + n_d T_s$$

Les performances, issues de la même simulation que ci-dessus sont données sur la figure 8. L'erreur de synchronisation est au plus de 500 ps (1 échantillon), largement acceptable au vue de la forme de l'impulsion représentée en figure 5.

Le procédé peut être mis en oeuvre par l'exécution d'instructions logicielles sur un processeur. Alternativement, il peut être mis en oeuvre par un hardware dédié, typiquement un circuit intégré numérique, soit spécifique (ASIC) ou basé sur une logique programmable (par exemple FPGA/Field Programmable Gate Array).

## Revendications

1.  Procédé de synchronisation d'un dispositif récepteur de télécommunications (20) recevant un signal radio impulsionnel à bande très large comprenant des paquets de données, un paquet de données comprenant un préambule, ledit procédé comprenant une étape de synchronisation du dispositif récepteur (20) sur le signal reçu en fonction dudit préambule ;

    ledit procédé étant **caractérisé en ce que** les étapes suivantes sont mises en oeuvre par le dispositif récepteur de télécommunication (20), le préambule comprenant une première partie de préambule d'au moins deux occurrences d'une première séquence de préambule de N impulsions espacées d'une période T et qui sont chacune égale à une impulsion de référence pondérée par un coefficient complexe $c_n$, n = 0 à N-1 indiquant le rang de l'impulsion dans la première séquence, ledit préambule comprenant en outre une deuxième partie de préambule d'au moins deux occurrences d'une deuxième séquence de préambule égale à la conjuguée de la première séquence :

    i/ échantillonnage du préambule avec une période d'échantillonnage $T_s$, $T = P \times T_s$ avec P nombre entier supérieur ou égal à 1 ;
    ii/ considérant les NP échantillons successifs $s_n$ pour n=0 à NP-1, d'une tranche, de durée NT, de première partie de préambule d'un paquet de signal reçu, détermination de la séquence de valeurs, $x_n = c^*_{\left\lfloor \frac{n}{P} \right\rfloor} s_n$ ;
    iii/ considérant les NP échantillons successifs $z_n$ pour n=0 à NP-1, d'une tranche, de durée NT, de deuxième partie de préambule d'un paquet de signal reçu, détermination de la séquence de valeurs $y_n = c_{\left\lfloor \frac{n}{P} \right\rfloor} z_n$ ;
    iv/ détermination de la fréquence $f_d$ de la séquence $x_n$ et de la fréquence $f_g$ de la séquence $y_n$ avec n=0 à NP-1 ;
    v/ calcul d'au moins un décalage à appliquer pour la synchronisation sur le signal reçu parmi un décalage fréquentiel $\Delta f$ et un décalage temporel $t_{0m}$ en fonction des équations suivantes :

$$f_d = \frac{1}{NPT_s}\left(\left\lfloor \frac{t_{0m}}{T} \right\rfloor + \epsilon\right) + \Delta f$$
$$f_g = -\frac{1}{NPT_s}\left(\left\lfloor \frac{t_{0m}}{T} \right\rfloor + \epsilon\right) + \Delta f$$

où

$$\epsilon = \begin{cases} 0 \text{ si } \dfrac{n}{P} - \left\lfloor \dfrac{n}{P} \right\rfloor \geq \dfrac{t_{0m}}{T} - \left\lfloor \dfrac{t_{0m}}{T} \right\rfloor \\ 1 \text{ sinon} \end{cases}$$

    vi/ étape de synchronisation en fonction d'au moins ledit décalage calculé.

**2.** Procédé de synchronisation d'un dispositif récepteur de télécommunications (20) selon la revendication 1, selon lequel le dispositif récepteur (20) met en oeuvre les étapes suivantes :

- effectuer une Transformée de Fourier Discrète, nommée TFD, des $x_n$ pour n = 0 à NP-1 déterminés pour une tranche indicée $k_d$, puis déterminer $n_d = \arg\max_{n_0}\left(\max_m \left|X_m^{k_d,n_0}\right|\right)$, où $X_m^{k_d,n_0} = TFD\left(x_{nP+n_0}^{k_d}\right)$, $n_0 \in [\![0; P-1]\!]$ et ensuite déterminer l'indice $m_d \in [\![0; N-1]\!]$ du maximum du module de $X_m^{k_d,n_d}$, i.e. $m_d = \arg\max_m \left|X_m^{k_d,n_d}\right|$ ;

- déterminer une estimation, $\hat{f}_d$, de la valeur de la fréquence $f_d$ avec $\hat{f}_d = \begin{cases} \frac{m_d}{NT} & \text{si } m_d < \frac{N}{2} \\ \frac{m_d}{NT} - \frac{1}{T_s} & \text{si } m_d \geq \frac{N}{2} \end{cases}$ ;

- effectuer une Transformée de Fourier Discrète, nommée TFD, des $y_{nP+n_d}^{k_g}$, pour n = 0 à NP-1, déterminés pour une tranche indicée $k_g$, puis étant donné $Y_m^{k_g,n_d} = TFD\left(y_{nP+n_d}^{k_g}\right)$, $n_0 \in [\![0; P-1]\!]$ et ensuite déterminer l'indice $m_g \in [\![0; N-1]\!]$ du maximum du module de $Y_m^{k_g,n_d}$, i.e. $m_g = \arg\max_m \left|Y_m^{k_g,n_d}\right|$ ;

- déterminer une estimation, $\hat{f}_g$, de la valeur de la fréquence $f_g$ avec $\hat{f}_g = \begin{cases} \frac{m_g}{NT} & \text{si } m_g < \frac{N}{2} \\ \frac{m_g}{NT} - \frac{1}{T_s} & \text{si } m_g \geq \frac{N}{2} \end{cases}$ .

**3.** Procédé de synchronisation d'un dispositif récepteur de télécommunications (20) selon la revendication 2, selon lequel le dispositif récepteur (20) détermine une estimation $\widehat{\Delta f}$ du décalage en fréquence $\Delta f$ à l'aide de la formule suivante : $\widehat{\Delta f} = \frac{\hat{f}_d + \hat{f}_g}{2}$ .

**4.** Procédé de synchronisation d'un dispositif récepteur de télécommunications (20) selon la revendication 2, selon lequel si $m_d$ et $m_g$ n'ont pas la même parité, la valeur de celui de $m_d$ et $m_g$ dont la seconde valeur la plus grande de transformée de Fourier est la plus proche du maximum est alors modifiée, la valeur de l'index modifié étant fixée égale à l'index de cette seconde valeur.

**5.** Procédé de synchronisation d'un dispositif récepteur de télécommunications (20) selon l'une quelconque des revendications 2 et 4, selon lequel le dispositif récepteur (20) met en oeuvre les étapes suivantes :

- calcul de $\Delta\varphi_0 = \arg\left(X_{m_d}^{k_d+1,n_d} conj\left(X_{m_d}^{k_d,n_d}\right)\right)$

- soit $m_{d2}$ l'indice voisin de $m_d$ tel que $\left|X_{m_d}^{k_d,n_d}\right|$ et $\left|X_{m_{d2}}^{k_d,n_d}\right|$ sont espacés de moins d'une valeur prédéfinie, la valeur de $\Delta\varphi$ est déterminée par application de :

si $\Delta\varphi_0 < 0$ et $m_d - m_{d2} < 0$ alors $\Delta\varphi = \Delta\varphi_0 + 2\pi$
si $\Delta\varphi_0 > 0$ et $m_d - m_{d2} > 0$ alors $\Delta\varphi = \Delta\varphi_0 - 2\pi$
sinon $\Delta\varphi = \Delta\varphi_0$

- détermination d'une estimation $\widehat{\Delta f}$ du décalage en fréquence $\Delta f$ à l'aide de la formule suivante

$$\widehat{\Delta f} = \frac{\hat{f}_d + \hat{f}_g}{2} + \frac{\Delta\varphi}{2\pi NT} .$$

6. Programme d'ordinateur, destiné à être stocké dans la mémoire d'un dispositif récepteur de télécommunications (20) comprenant en outre un microcalculateur (211), ledit programme d'ordinateur comprenant des instructions qui, lorsqu'elles sont exécutées sur le microcalculateur (211), mettent en oeuvre les étapes i, ii, iii et iv d'un procédé selon l'une des revendications précédentes.

7. Dispositif récepteur de télécommunications (20), adapté pour recevoir un signal radio impulsionnel à bande très large comprenant des paquets de données, un paquet de données comprenant un préambule, ledit dispositif récepteur (20) étant adapté pour effectuer une opération de synchronisation sur le signal reçu en fonction dudit préambule ;

ledit dispositif étant **caractérisé en ce que**, le préambule comprenant une première partie de préambule d'au moins deux occurrences d'une première séquence de préambule de N impulsions espacées d'une période T et qui sont chacune égale à une impulsion de référence pondérée par un coefficient complexe $c_n$, n = 0 à N-1 indiquant le rang de l'impulsion dans la première séquence, ledit préambule comprenant en outre une deuxième partie de préambule d'au moins deux occurrences d'une deuxième séquence de préambule égale à la conjuguée de la première séquence, le dispositif est adapté pour échantillonner le préambule avec une période d'échantillonnage $T_s$, $T = P \times T_s$ avec P nombre entier supérieur ou égal à 1 ;

le dispositif (20) est en outre adapté pour, considérant les NP échantillons successifs $s_n$ pour n=0 à NP-1, d'une tranche, de durée NT, de première partie de préambule d'un paquet de signal reçu, déterminer la séquence de valeurs, $x_n = c^*_{\lfloor\frac{n}{P}\rfloor} s_n$ ;

le dispositif (20) est en outre adapté pour, considérant les NP échantillons successifs $z_n$ pour n=0 à NP-1, d'une tranche, de durée NT, de deuxième partie de préambule d'un paquet de signal reçu, déterminer la séquence de valeurs $y_n = c_{\lfloor\frac{n}{P}\rfloor} z_n$ ;

le dispositif (20) est en outre adapté pour déterminer la fréquence $f_d$ de la séquence $x_n$ et de la fréquence $f_g$ de la séquence $y_n$ avec n=0 à NP-1 ;

le dispositif (20) est en outre adapté pour calculer au moins un décalage à appliquer pour la synchronisation sur le signal reçu parmi un décalage fréquentiel $\Delta f$ et un décalage temporel $t_{0m}$ en fonction des équations suivantes :

$$f_d = \frac{1}{NPT_s}\left(\left\lfloor\frac{t_{0m}}{T}\right\rfloor + \epsilon\right) + \Delta f$$

$$f_g = -\frac{1}{NPT_s}\left(\left\lfloor\frac{t_{0m}}{T}\right\rfloor + \epsilon\right) + \Delta f$$

où

$$\epsilon = \begin{cases} 0 \text{ si } \frac{n}{P} - \left\lfloor\frac{n}{P}\right\rfloor \geq \frac{t_{0m}}{T} - \left\lfloor\frac{t_{0m}}{T}\right\rfloor \\ 1 \text{ sinon} \end{cases}$$

le dispositif (20) étant en outre adapté pour effectuer une synchronisation en fonction d'au moins ledit décalage calculé.

8. Dispositif récepteur de télécommunications (20) selon la revendication 7, adapté pour effectuer une Transformée de Fourier Discrète, nommée TFD, des $x_n$ pour n = 0 à NP-1 déterminés pour une tranche indicée $k_d$, puis déterminer $n_d = \arg\max_{n_0}\left(\max_m |X_m^{k_d, n_0}|\right)$, où $X_m^{k_d, n_0} = TFD\left(x_{nP+n_0}^{k_d}\right)$, $n_0 \in [\![0; P-1]\!]$ et ensuite déterminer

l'indice $m_d \in [\![0; N-1]\!]$ du maximum du module de $X_m^{k_d, n_d}$ , i.e. $m_d = \arg\max_m \left| X_m^{k_d, n_d} \right|$ ;

ledit dispositif (20) étant adapté pour déterminer une estimation, $\hat{f}_d$, de la valeur de la fréquence $f_d$ avec

$$\hat{f}_d = \begin{cases} \dfrac{m_d}{NT} \text{ si } m_d < \dfrac{N}{2} \\ \dfrac{m_d}{NT} - \dfrac{1}{T_s} \text{ si } m_d \geq \dfrac{N}{2} \end{cases}$$ ;

ledit dispositif (20) étant adapté pour effectuer une Transformée de Fourier Discrète, nommée TFD, des $y_{nP+n_d}^{k_g}$ , pour n = 0 à NP-1, déterminés pour une tranche indicée $k_g$, puis étant donné $Y_m^{k_g, n_d} = TFD\left(y_{nP+n_d}^{k_g}\right), n_0 \in [\![0; P-1]\!]$ et ensuite déterminer l'indice $m_g \in [\![0; N-1]\!]$ du maximum du module de $Y_m^{k_g, n_d}$ , i.e. $m_g = \arg\max_m \left| Y_m^{k_g, n_d} \right|$ ;

ledit dispositif (20) étant adapté pour déterminer une estimation, $\hat{f}_g$, de la valeur de la fréquence $f_g$ avec

$$\hat{f}_g = \begin{cases} \dfrac{m_g}{NT} \text{ si } m_g < \dfrac{N}{2} \\ \dfrac{m_g}{NT} - \dfrac{1}{T_s} \text{ si } m_g \geq \dfrac{N}{2} \end{cases}$$ .

9. Dispositif récepteur de télécommunications (20) selon la revendication 8, adapté pour determine une estimation $\widehat{\Delta f}$ du décalage en fréquence Δf à l'aide de la formule suivante : $\widehat{\Delta f} = \dfrac{\hat{f}_d + \hat{f}_g}{2}$ .

10. Dispositif récepteur de télécommunications (20) selon la revendication 8, adapté pour, si $m_d$ et $m_g$ n'ont pas la même parité, modifier la valeur de celui de $m_d$ et $m_g$ dont la seconde valeur la plus grande de transformée de Fourier est la plus proche du maximum, la valeur de l'index modifié étant fixée égale à l'index de cette seconde valeur.

```
┌─────────────────────────────────────────┐
│                                         │      ⌒101
│      Emission préambule : v(t), v*(t)   │ ⟋
│                                         │
└─────────────────────────────────────────┘
                    ┊
                    ┊
                    ↓
┌─────────────────────────────────────────┐
│         Réception préambule             │      ⌒102
│              → sₙ                        │ ⟋
└─────────────────────────────────────────┘
                    ↓
┌─────────────────────────────────────────┐
│         Découpage en tranches           │      ⌒103
│          wₙᵏ = sₙ₊ₖₙₚ                    │ ⟋
└─────────────────────────────────────────┘
                    ↓
┌─────────────────────────────────────────┐
│         Calcul xₙᵏ, yₙᵏ                  │      ⌒104
│                                         │ ⟋
└─────────────────────────────────────────┘
                    ↓
┌─────────────────────────────────────────┐
│  Détermination de la fréquence f_d de   │      ⌒105
│  la séquence xₙᵏ et de la fréquence f_g  │ ⟋
│  de la séquence yₙᵏ                      │
└─────────────────────────────────────────┘
                    ↓
┌─────────────────────────────────────────┐
│  Calcul de    Δf = (f_d+f_g)/2          │      ⌒106
│                                         │ ⟋
│  Calcul de  t₀ₘ = (f_d - Δf) NT² + n_d T_s │
└─────────────────────────────────────────┘
                    ↓
┌─────────────────────────────────────────┐
│  Synchronisation temporelle (Δf)        │      ⌒107
│  Synchronisation fréquentielle (t₀ₘ)    │ ⟋
└─────────────────────────────────────────┘
```

**101** Emission préambule : $v(t)$, $v^*(t)$

**102** Réception préambule $\rightarrow s_n$

**103** Découpage en tranches $w_n^k = s_{n+kNP}$

**104** Calcul $x_n^k$, $y_n^k$

**105** Détermination de la fréquence $f_d$ de la séquence $x_n^k$ et de la fréquence $f_g$ de la séquence $y_n^k$

**106** Calcul de $\Delta f = \dfrac{f_d+f_g}{2}$

Calcul de $t_{0m} = (f_d - \Delta_f)\, NT^2 + n_d T_s$

**107** Synchronisation temporelle $(\Delta_f)$

Synchronisation fréquentielle $(t_{0m})$

# FIG.1

FIG.2

FIG.3

FIG.4

FIG.5

FIG.6

FIG.7

FIG.8

Europäisches
Patentamt

European
Patent Office

Office européen
des brevets

# RAPPORT DE RECHERCHE EUROPEENNE

**Numéro de la demande**

EP 24 20 7040

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 2022/407765 A1 (DEHMAS FRANÇOIS [FR]) 22 décembre 2022 (2022-12-22) * figures 1-5 * * alinéa [0050] - alinéa [0123] * ----- | 1-10 | INV. H04B1/7163 H04B1/7183 |
| A | ERSEGHE T ET AL: "Performance of UWB Impulse Radio in strong MAI with frequency offsets estimation", ULTRA-WIDEBAND, 2008. ICUWB 2008. IEEE INTERNATIONAL CONFERENCE ON, IEEE, PISCATAWAY, NJ, USA, 10 septembre 2008 (2008-09-10), pages 213-216, XP031350124, ISBN: 978-1-4244-2216-6 * Sections II., III. and IV. * ----- | 1-10 | |

**DOMAINES TECHNIQUES RECHERCHES (IPC)**

H04B

Le présent rapport a été établi pour toutes les revendications

| Lieu de la recherche | Date d'achèvement de la recherche | Examinateur |
|---|---|---|
| Berlin | 18 février 2025 | Chave, Julien |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

............................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 24 20 7040

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

18-02-2025

| Document brevet cité au rapport de recherche | Date de publication | Membre(s) de la famille de brevet(s) | Date de publication |
|---|---|---|---|
| US 2022407765 A1 | 22-12-2022 | EP 4105673 A1 | 21-12-2022 |
| | | FR 3124339 A1 | 23-12-2022 |
| | | US 2022407765 A1 | 22-12-2022 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- IEEE Standard for Low-Rate Wireless Networks. *IEEE Std 802.15.4-2020 (Révision of IEEE Std 802.15.4-2015)*, 23 July 2020, 1-800